# EUROPÄISCHE PATENTSCHRIFT

(11) **EP 1 113 445 B1**
(45) Veröffentlichungstag und Bekanntmachung des Hinweises auf die Patenterteilung: **12.09.2007**
(21) Anmeldenummer: 00127622.9
(22) Anmeldetag: 16.12.2000
(51) Int. Cl.: G11B 31/00, H04B 1/20, H04H 5/00

(54) **Verfahren und Vorrichtung zum Einkoppeln von Signalen in ein Multimedia-System**
Process and device for coupling signals in a multimedia system
Procédé et dispositif de couplage de signaux dans un système multimédia

(30) Priorität: 30.12.1999 DE 19964063
(43) Veröffentlichungstag der Anmeldung: 04.07.2001
(73) Patentinhaber: Volkswagen AG, 38436 Wolfsburg (DE)
(72) Erfinder: Herrn Dr. Hallas Ernst, 91301 Forchheim (DE)
(74) Vertreter: Meyer, Enno

(56) Entgegenhaltungen:
- DE-A- 19 737 325
- US-A- 4 829 570
- US-A- 4 916 532
- US-A- 5 673 323
- RAKOTONIRAINY A: "Trends and future of mobile computing" DATABASE AND EXPERT SYSTEMS APPLICATIONS, 1999. PROCEEDINGS. TENTH INTERNATIONAL WORKSHOP ON FLORENCE, ITALY 1-3 SEPT. 1999, LOS ALAMITOS, CA, USA,IEEE COMPUT. SOC, US, 1. September 1999 (1999-09-01), Seiten 136-140, XP010352471 ISBN: 0-7695-0281-4
- MOST COOPERATION: "MOST Specification Framework Rev 1.1" [Online] 1999 , MOST COOPERATION , KARLSRUHE, DE XP002259198 Gefunden im Internet: <URL: http://www.mostnet.de/downloads/Specificat ions/MOST%20Framework/?sort=name&setsort=v ersion> [gefunden am 2003-10-24] * Sektion 1.1 * * Seite 7 *

## Beschreibung

Die Erfindung betrifft ein Verfahren und eine Vorrichtung zum Einkoppeln von Signalen in ein Multimedia-System gemäß dem Oberbegriff des Anspruches 1 und dem Oberbegriff des Anspruches 5.

Im Zuge der Technik kommen immer neuere und bessere Speichermedien für Audio- und/oder Videodaten zum Einsatz. Ältere bereits vorhandene Abspielgeräte können derartige neue Speichermedien meist nicht verarbeiten. So ist ein Nutzer, der diese neuen Medien verwenden möchte, zumeist darauf verwiesen, sich ein neues Abspielgerät, welches diese neuen Speichermedien verarbeiten kann, zu kaufen.

Insbesondere bei bestehenden Multimedia-Systemen, welche insbesondere über einen Bus vernetzt sind, ist es nicht ohne weiteres möglich, ein neues Gerät zu integrieren.

Aus dem Deutschen Gebrauchsmuster 9007501O1 ist ein Autoradio bekannt, welches eine Abnehmbare Front aufweist. Im abgenommenen Zustand der Front werden zusätzliche Bedienungselemente oder die Einführung für den Ton- Bildträger eines Mediaplayers, der beispielsweise ein Kassettenlaufwerk, ein CD-Laufwerk oder auch ein DVD-Laufwerk darstellen kann, freigegeben. Damit können im abgeklappten Zustand die zusätzlichen Bedienelemente betätigt oder der Bild-Tonträger in den Mediaplayer eingeführt werden.

Aus dem Deutschen Gebrauchsmuster 8802620O1 ist ein Autoradio bekannt, in dessen Kassettenschachtöffnung ein Kunststoffteil eingeführt wird oder diesem entnommen werden kann. Das entnehmbare Kunststoffteil ragt dabei teilweise in den Kassettenschacht hinein, während ein anderer Teil aus dem Kassettenschacht heraus ragt.

Im weiteren ist aus dem Deutschen Patent DE-C-19899154 ein Autoradio mit abklappbarer Front mit einem Mediaplayer dessen Ton-Bildträger durch eine Öffnung im Gehäuse des Autoradios vollständig einführbar ist, wobei die Öffnung so angeordnet ist, daß sie bei abgeklappter Front zur Einführung des Ton-Bildträgers zugänglich ist, bekannt. Bei nicht abgeklappter Front ist der Zugriff verschlossen. Ein aus dem Autoradio abnehmbares Bauteil zur Aufnahme gerätespezifischer Daten, wie Garantiekarte, Codename, Gerätenummer o.ä. ist vorgesehen, wobei das entnehmbare Bauteil die Gestalt eines Ton-Bildträgers aufweist.

Im weiteren sind Adapterkassette z.B. von CD-Playern, insbesondere von CD-Walkman bekannt, um Tonsignale in ein Kassetten-Autoradio einzuspielen.

Aus DE-A-197 37 322 ist ein Autoradio, welches ein rechteckförmiges Autoradiogehäuse aufweist, auf dessen Vorderseite ein abnehmbares Bedienteil aufgesetzt ist, welches Bedienteil mit dem Autoradiogehäuse über mindestens eine Kontaktleiste verbunden ist, über welche Kontaktleiste bei aufgesetzten Bedienteil mittels der Tasten des Bedienteils eingegebene Bedienbefehle an einem im Autoradiogehäuse vorgesehenen Mikrocomputer übertragbar werden, bekannt. Das Bedienteil weist einen Infrarotsender auf und an der Vorderseite des Autoradiogehäuses ist ein Infrarotempfänger vorgesehen, so daß das Bedienteil im abgenommenen Zustand als Fernbedienung dient.

Aus DE-A-197 37 325 ist eine Kommunikationsanlage für ein Kraftfahrzeug mit einer Mehrzahl von Komponenten, die an verschiedenen Stellen des Kraftfahrzeuges positioniert sind, bekannt. Die einzelnen Komponenten der Kommunikationsanlage sind über einen optischen Bus miteinander verbunden. Zur Busverwaltung ist ein Mikrocomputer vorgesehen. Jede der Komponenten der Kommunikationsanlage ist mit einem Speicher für ein eine Kommunikationsanlage individuell charakterisierendes Anlagencodesignal versehen, und der Mikrocomputer ist derart programmiert, daß er vor der Aktivierung einer der Komponenten überprüft, ob im Speicher dieser Komponente das Anlagencodesignal abgespeichert ist oder nicht. Der Mikrocomputer gibt den Betrieb der Komponente nur dann frei, wenn im Speicher der Komponente das Anlagencodesignal abgespeichert ist.

Aus all diesen bekannten Stand der Technik ist jedoch eine Lösung des Problems, neue Speichermedien in bestehende Multimedia-Systeme einzufügen und für den Nutzer abspielbar zu machen, nicht hinreichend gelöst.

Aufgabe der Erfindung ist es, eine Einkopplung von auf neuen Medien gespeicherten Signalen in bestehende Multimedia-Systeme zu ermöglichen, unter Vermeidung der oben genannten Probleme.

Diese Aufgabe wird erfindungsgemäß mit den Merkmalen des Anspruches 1 und des Anspruches 3 gelöst.

Vorteilhafte Weiterbildungen der Erfindung ergeben sich aus den anhängigen Ansprüchen sowie der weiteren Beschreibung.

Erfindungsgemäß besteht ein Multimedia-System aus einer Audio-Einheit, einer Video-Einheit sowie einer Wiedergabe-Einheit. Die Audio-Einheit weist zumeist Audioeingänge in Form von Line-In-Eingängen für Stereosignale auf. Auf diese Line-In-Eingänge wird erfindungsgemäß ein Funkmodul angeschlossen. Bei diesem Funkmodul handelt es sich um ein Empfängermodul. Im weiteren ist ein externes Abspielgerät für neue Medien vorhanden. Dieses Abspielgerät weist Line-Out-Ausgänge auf. Auf diese Line-Out-Ausgänge wird ebenfalls ein Funkmodul angeschlossen. Bei diesem Funkmodul handelt es sich um ein Sendermodul. Die Audio-Einheit wird in einen Sonderbetriebsmodus geschaltet, in welchem die Signale, welche über die Line-In-Eingänge anliegen, in die Audio-Einheit übernommen, verstärkt und im Multimedia-System an die entsprechenden Wiedergabeeinheiten verteilt werden. Das externe Wiedergabegerät wird in Betrieb genommen. Über dessen Line-Out-Ausgänge werden die Signale an das angeschlossene Funkmodul bereitgestellt. Das Funkmodul überträgt die Signale an das zweite Funkmodul, welches an der Audio-Einheit und deren Line-In-Eingängen angeschlossen. Dieses Funkmodul empfängt die über Funk übertragenen Signale und koppelt diese über die Line-In-Eingänge in die Audio-Anlage ein. Auf diese überraschend einfache Art und Weise ist es möglich, Signale von einem neuen Medium mit einer vorhandenen Wiedergabeeinheit problemlos in ein bestehendes Multimedia-System zu übertragen und dort wiederzugeben.

Zur Verdeutlichung der Erfindung und der erfindungswesentlichen Merkmale wird diese anhand nachfolgender Figur anhand eines konkreten Ausführungsbeispieles für eine Multimedia-System in einem Kraftfahrzeug näher beschrieben.

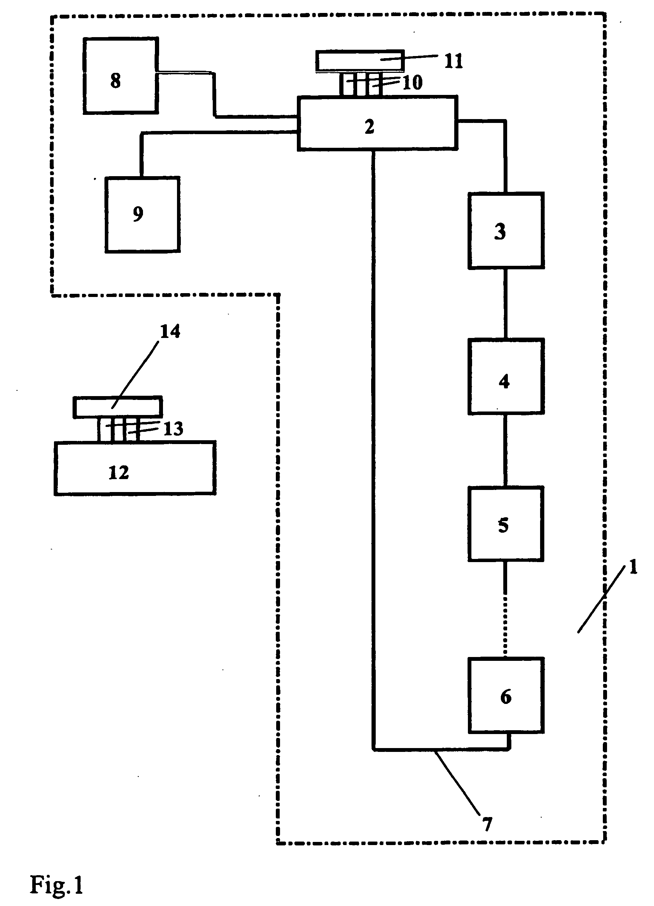

Figur 1 zeigt den schematischen Aufbau einer Multimedia-System in einem Kraftfahrzeug sowie den Aufbau des Wiedergabegerätes.

Das Multimedia-System 1 besteht aus einer Audio-Einheit 2, einem Mikrocomputer 3, einer GPS-Einheit 4, einer GSM-Einheit 5 ,sowie weiteren angeschlossenen Einheiten 6, und den Audiowiedergabe-Einheiten 8,9. Die Einheiten 2,3,4,5,6 sind über eine Bus 7, insbesondere einem optischen Bus, insbesondere einem Bus der nach dem MOST-Konzept aufgebaut ist, verbunden. Bei einem derartigen Bus handelt es sich um eine Ringstruktur. An die Audio-Einheit 2 sind die Audiowiedergabe-Einheiten 8,9, welche insbesondere Lautsprecher sind, angekoppelt. In der Audio-Einheit 2 ist zum einen ein Runkfungsignalempfänger sowie eine Verstärkereinheit für Audiosignale angeordnet. Diese Einheiten werden über die Bedieneinheiten, welche der Audio-Einheit 2 zugeordnet sind, gesteuert.

Die Audio-Einheit 2 weist Line-In-Eingänge 10 auf. Diese Line-In-Eingänge 10 sind als Eingang für Stereosignale, welche von einem externen Gerät stammen vorgesehen, d.h. Stereosignale geordnet nach linkem und rechtem Kanal können eingekoppelt werden. Auf diese Line-In-Eingänge 10 ist ein Funkempfangsmodul 11 aufgesetzt und kontaktiert diese. In diesem Funkempfangsmodul 11 befinden sich zwei Funkempfänger, welche jeweils Signale für einen Audiokanal empfangen.

Im weiteren ist eine Wiedergabeeinheit 12 für neue Medien vorhanden. Diese Wiedergabeeinheit 12 weist Line-Out-Ausgänge 13 auf. Über diese Line-Out-Ausgänge werden Stereo-Audio-Signale, geordnet nach linkem und rechtem Audiokanal bereitgestellt. Auf diese Line-Out-Eingänge ist ein Funksendemodul 14 aufgesetzt. In diesem Funksendemodul 14 befinden sich zwei Funksender, welche jeweils Signale für einen Audiokanal senden.

Über die Wiedergabeeinheit 12, in welche neue Medien einfügbar und abspielbar sind, werden diese Medien abgespielt. Über die Line-Out-Ausgänge 13 werden diese Signale an das Funksendemodul 14 geleitet. Im Funksendemodul 14 ist jeweils eine Sendeeinheit für jeden Kanal vorhanden. Das Funksendemodul 14 überträgt nunmehr die über die Line-Out-Ausgänge 13 bereitgestellten Audiosignale.

Die Audio-Einheit 2 wird nunmehr in einen Sonderbetriebsmodus geschaltet. In diesem Sonderbetriebsmodus werden die über die Line-In-Eingänge 10 anliegenden Signale in das Gerät eingekoppelt und über die Wiedergabeeinheiten 8,9 wiedergegeben. Das Funkempfangsmodul 11 empfängt die von dem Funksendemodul 14 gesendeten Signale. Das Funkempfangsmodul 11 empfängt diese Signale und koppelt diese über die Line-In-Eingänge 10 in die Audio-Einheit 2 ein.

Auf diese Art und Weise können Signale die auf der Wiedergabeeinheit 12 abspielbaren neuen Medien gespeichert sind, in das bestehende System eingekoppelt werden.

In einer weiteren vorteilhaften Ausgestaltung der Erfindung ist das Funksendemodul wie auch das Funkempfangsmodul mit Sendern und Empfängern ausgestattet, welche nach dem Blue-Tooth-Konzept arbeiten. Beim Blue-Tooth-Konzept handelt es sich um eine Funkschnittstelle, welche für kurze Übertragungsstrecken geeignet ist und insbesondere geeignet ist Audiodaten zu übertragen, da die Bandbreite der Sender beschränkt ist.

### Bezugszeichenliste

- 1: Multimedia-System
- 2: Audio-Einheit
- 3: Mikrocomputer
- 4: GPS-Einheit
- 5: GSM-Einheit
- 6: weitere Einheiten
- 7: Bus, insbesonderer MOST-Bus
- 8,9: Audiowiedergabeeinheit
- 10: Line-In-Eingänge
- 11: Funkempfangsmodul
- 12: Wiedergabegerät
- 13: Line-Out-Ausgänge
- 14: Funksendemodul

## Patentansprüche

1. Verfahren zum Einkoppeln von Signalen in ein Multimedia-System (1) eines Kraftfahrzeugs bestehend aus mindestens einer Audio-Einheit (2) mit angeschlossenen Audiowiedergabeeinheiten (8,9), wobei die Audio-Einheit (2) Line-In-Eingänge (10) für Audiosignale aufweist,
**dadurch gekennzeichnet, dass**
von einem Wiedergabegerät (12) mit Line-Out-Ausgängen (13) Audiosignale über eine Funkstrecke mittels einem Funksendemodul (14), welches die über die Line-Out-Ausgänge (13) bereitgestellten Audiosignale in Funksignale wandelt und einem Funkempfangsmodul (11), welches die empfangenen Funksignale in Audiosignale wandelt und über die Line-In-Eingänge (10) der Audio-Einheit (2) bereitstellt, übertragen werden, wobei diese Audiosignale in die Audio-Einheit (2) über die Line-In-Eingänge (10) einkoppelt werden, wobei die Audio-Einheit (2) vor der Einkopplung der Audiosignale über die Line-In-Eingänge (10) in einen Sonderbetriebsmodus geschaltet wird.

2. Verfahren nach Anspruch 1, **dadurch gekennzeichnet, dass** die Audio-Einheit (2) nach Beendigung der Einkopplung der Audiosignale über die Line-In-Eingänge (10) aus dem Sonderbetriebsmodus wieder in den Normalbetriebsmodus geschaltet wird.

3. Multimedia-System (1) eines Kraftfahrzeugs bestehend aus mindestens einer Audio-Einheit (2), welche Line-In-Eingänge (10) für Stereotonsignale aufweist, und Audiowiedergabeeinheiten (8, 9), wobei die Audio-Einheit (2) an die Audiowiedergabeeinheiten (8, 9) angeschlossen ist, über welche die Audiosignale der Audio-Einheit (2) wiedergegeben werden,
**dadurch gekennzeichnet, dass**
das Mulimediasystem ferner aufweist
eine Wiedergabeeinheit (12) für Audiosignale mit Line-Out-Ausgängen (13)
ein Funksendemodul (14), welches an die Line-Out-Ausgänge (13) angeschlossen ist und die an diesen Ausgängen anliegenden Audiosignale in Funksignale wandelt und per Funk überträgt,
ein Funkempfangsmodul (11), welches an die Line-In-Eingänge (10) angeschlossen ist und die vom Funksendemodul (14) übertragenen Funksignale empfängt und in Audiosignale wandelt und über die Line-In-Eingänge (10) der Audio-Einheit (2), an welche das Funkempfangsmodul (11) angeschlossen ist, einkoppelt und wobei
die Audio-Einheit (2) vor der Einkopplung der Audiosignale über die Line-In-Eingänge (10) in einen Sonderbetriebsmodus schaltet.

4. Vorrichtung nach Anspruch 3, **dadurch gekennzeichnet, dass** die Wiedergabeeinheit (12) ein CD-Player, ein MP3-Player oder ein DVD-Player ist.

5. Vorrichtung nach einem oder mehreren der Ansprüche 3 oder 4, **dadurch gekennzeichnet, dass** das Funksendemodul (14) zwei Funksender und das Funkempfangsmodul zwei Funkempfänger aufweist, wobei jeweils ein Funksender des Funksendemoduls (14) mit einem Funkempfänger des Funkempfangsmoduls (11) in der Sendefrequenz übereinstimmt.

6. Vorrichtung nach einem oder mehreren der Ansprüche 3 bis 5, **dadurch gekennzeichnet, dass** die Funktionseinheiten (2, 3, 4, 5, 6) des Multimedia-Systems (1) über einen Bus (7) miteinander kommunizieren, die Kommunikation über den Bus (7) von dem Mikrocomputer (3) gesteuert wird und der Bus (7) ein optischer Bus ist.

## Claims

1. Method for inputting signals into a multimedia system (1) in a motor vehicle comprising at least one audio unit (2) having connected audio reproduction units (8, 9), where the audio unit (2) has line-in inputs (10) for audio signals,
**characterized in that**
a reproduction appliance (12) having line-out outputs (13) transmits audio signals via a radio link using a radio transmission module (14), which converts the audio signals provided via the line-out outputs (13) into radio signals, and a radio reception module (11), which converts the received radio signals into audio signals and makes them available to the audio unit (2) via the line-in inputs (10), these audio signals being input into the audio unit (2) via the line-in inputs (10), with the audio unit (2) being switched to a special mode of operation before the audio signals are input via the line-in inputs (10).

2. Method according to Claim 1, **characterized in that** the audio unit (2) is switched from the special mode of operation back to the normal mode of operation when the audio signals have finished being input via the line-in inputs (10).

3. Multimedia system (1) in a motor vehicle comprising at least one audio unit (2), which has line-in inputs (10) for stereo audio signals, and audio reproduction units (8, 9), where the audio unit (2) is connected to the audio reproduction units (8, 9) which are used to reproduce the audio signals from the audio unit (2),
**characterized in that**
the multimedia system also has
a reproduction unit (12) for audio signals having line-out outputs (13),
a radio transmission module (14) which is connected to the line-out outputs (13) and which converts audio signals applied to these outputs into radio signals and transmits them by radio,
a radio reception module (11) which is connected to the line-in inputs (10) and which receives the radio signals transmitted by the radio transmission module (14) and converts them into audio signals and inputs them via the line-in inputs (10) of the audio unit (2) to which the radio reception module (11) is connected, and where
the audio unit (2) switches to a special mode of operation before the audio signals are input via the line-in inputs (10).

4. Apparatus according to Claim 3, **characterized in that** the reproduction unit (12) is a CD player, an MP3 player or a DVD player.

5. Apparatus according to one or more of Claims 3 and 4, **characterized in that** the radio transmission module (14) has two radio transmitters and the radio reception module has two radio receivers, where the transmission frequency of a respective radio transmitter in the radio transmission module (14) matches that of a radio receiver in the radio reception module (11).

6. Apparatus according to one or more of Claims 3 to 5, **characterized in that** the functional units (2, 3, 4, 5, 6) of the multimedia system (1) communicate with one another via a bus (7), the communication via the bus (7) is controlled by the microcomputer (3), and the bus (7) is an optical bus.

## Revendications

1. Procédé pour le couplage de signaux dans un système multimédia (1) d'un véhicule se composant d'au moins une unité audio (2) avec des unités de reproduction audio raccordée (8, 9), l'unité audio (2) présentant des entrées Line-In (10) pour les signaux audio,
**caractérisé en ce qu'**un appareil de reproduction (12) avec des sorties Line-Out (13) transmet des signaux audio sur un parcours radio au moyen d'un module d'émission radio (14) qui transforme les signaux audio mis à disposition par les sorties Line-Out (13) en signaux radio et au moyen d'un module de réception radio (11) qui transforme les signaux radio reçus en signaux audio et les met à disposition par les entrées Line-In (10) de l'unité audio (2), ces signaux audio étant accouplés dans l'unité audio (2) par les entrées Line-In (10), et l'unité audio (2) étant placée dans un mode de fonctionnement exceptionnel avant le couplage des signaux audio par les entrées Line-In (10).

2. Procédé selon la revendication 1, **caractérisé en ce que** l'unité audio (2) est commutée à nouveau du mode de fonctionnement exceptionnel dans le mode de fonctionnement normal par l'intermédiaire des entrées Line-In (10) à la fin du couplage des signaux audio.

3. Système multimédia (1) d'un véhicule se composant d'au moins une unité audio (2) qui présente des entrées Line-In (10) pour des signaux audio stéréo et d'unités de reproduction audio (8, 9), l'unité audio (2) étant raccordée aux unités de reproduction audio (8 ,9) qui reproduisent les signaux audio de l'unité audio (2),
**caractérisé en ce que**
le système multimédia présente en outre
une unité de reproduction (12) pour des signaux audio avec des sorties Line-Out (13),
un module d'émission radio (14) qui est raccordé aux sorties Line-Out (13) et qui transforme les signaux audio appliqués à ces sorties en signaux radio et les transmet par radio,
un module de réception radio (11) qui est raccordé aux entrées Line-In (10) et qui reçoit les signaux radio transmis par le module d'émission radio (14) et les transforme en signaux audio et qui est accouplé par les entrées Line-In (10) de l'unité audio (2), à laquelle est raccordé le module de réception radio (11) et
l'unité audio (2) commutant avant l'accouplement des signaux audio par les entrées Line-In (10) dans un mode de fonctionnement exceptionnel.

4. Dispositif selon la revendication 3, **caractérisé en ce que** l'unité de reproduction (12) est un lecteur CD, MP3 ou DVD.

5. Dispositif selon l'une ou plusieurs des revendications 3 ou 4, **caractérisé en ce que** le module d'émission radio (14) présente deux émetteurs radio et le module de réception radio deux récepteurs radio, un émetteur radio du module d'émission radio (14) correspondant à chaque fois à un récepteur radio du module de réception radio (11) dans la fréquence d'émission.

6. Dispositif selon l'une ou plusieurs des revendications 3 à 5, **caractérisé en ce que** les unités de fonction (2, 3, 4, 5, 6) du système multimédia (1) communiquent entre elles par un bus (7), **en ce que** la communication est commandée via le bus (7) par le microordinateur (3) et **en ce que** le bus (7) est un bus optique.
